# EUROPÄISCHE PATENTSCHRIFT

(11) **EP 0 836 790 B1**
(45) Veröffentlichungstag und Bekanntmachung des Hinweises auf die Patenterteilung: **20.09.2000**
(21) Anmeldenummer: 96921874.2
(22) Anmeldetag: 01.07.1996
(51) Int. Cl.: H04Q 11/04, H04L 12/46

(54) **VERFAHREN ZUM ÜBERMITTELN VON INFORMATIONSPAKETEN ZWISCHEN EMULIERTEN LANS**
PROCESS FOR TRANSFERRING DATA PACKETS BETWEEN EMULATED LANS
PROCEDE POUR LA TRANSMISSION DE PAQUETS DE DONNEES ENTRE LANS EMULES

(30) Priorität: 05.07.1995 DE 19524504; 28.09.1995 DE 19536201
(43) Veröffentlichungstag der Anmeldung: 22.04.1998
(73) Patentinhaber: SIEMENS AKTIENGESELLSCHAFT, 80333 München (DE)
(72) Erfinder: KARAPETKOV, Stefan, Santa Clara, CA 95051 (US); FROMM, Ingrid, 81477 München (DE); PETRI, Bernhard, 81477 München (DE)
(86) Internationale Anmeldenummer: DE9601167
(87) Internationale Veröffentlichungsnummer: WO9702718

(56) Entgegenhaltungen:
- IEEE COMMUNICATIONS MAGAZINE, Bd. 33, Nr. 5, 1.Mai 1995, Seiten 70-85, XP000518773 HONG LINH TRUONG: "LAN EMULATION ON AN ATM NETWORK"
- COMMUNICATION FOR GLOBAL USERS, INCLUDING A COMMUNICATIONS THEORY MINI CONFERENCE ORLANDO, DEC. 6 - 9, 1992, Bd. 1 - 2 - 03, 6.Dezember 1992, INSTITUTE OF ELECTRICAL AND ELECTRONICS ENGINEERS, Seiten 1062-1066, XP000357716 CROCETTI P ET AL: "MULTICAST IN SMDS OVER AN ATM NETWORK"
- PROCEEDINGS OF THE INTERNATIONAL SWITCHING SYMPOSIUM, YOKOHAMA, OCT. 25 - 30, 1992, Bd. 1 - 2, 25.Oktober 1992, INSTITUTE OF ELECTRONICS;INFORMATION AND COMMUNICATION ENGINEERS, Seiten 224-228, XP000337648 DELODDERE D ET AL: "ARCHITECTURE AND IMPLEMENTATION OF A CONNECTIONLESS SERVER FOR B-ISDN"
- IEEE NETWORK: THE MAGAZINE OF COMPUTER COMMUNICATIONS, Bd. 9, Nr. 3, 1.Mai 1995, Seiten 28-37, XP000505282 NAIL KAVAK: "DATA COMMUNICATION IN ATM NETWORKS"
- ITU-T: "Recommendation I.364" 1993 , INTERNATIONAL TELECOMMUNICATION UNION , CH XP002017365 siehe Absatz 3.3

## Beschreibung

Die Erfindung betrifft ein Verfahren zum Übermitteln von Informationspaketen zwischen einem Ursprungs-LAN-Emulation-Client LEC eines ersten ELAN und einem LAN-Emulation-Client eines zweiten ELAN.

ELAN steht für emuliertes LAN, wie es insbesondere beschrieben ist in der Spezifikation 94-0035R9, "LAN Emulation Over ATM: Version 1.0" der LAN Emulation SWG Drafting Group des ATM Forum vom 6. Januar 1995, Editor: Bill Ellington. Hierbei handelt es sich um einen Ansatz des ATM-Forums zurMigration von heutigen LANs zu ATM-Netzen. ATM bedeutet hierbei "Asynchronus Transfer Mode", also asynchrones Daten- bzw. Informationsübertragungsverfahren. LAN ist eine Abkürzung von "Local Area Network". Bei LANs handelt es sich um datagrammorientierte Lokalnetze, die u.a. in dem Artikel von David D. Clark, Kenneth D. Progran und David P. Reed, "An Introduction to Local Area Networks" in Proceedings of the IEEE, Vol. 66, No. 11, November 1978 auf den Seiten 1497 bis 1517 beschrieben sind. Außerdem sind LANs in ISO/IEC TR 8802-1, "Overview of LAN-Standards beschrieben. LANs bieten einen verbindungslosen Dienst, den sogenannten MAC-Service, an. MAC steht hierbei für "Media Access Control". Im Gegensatz zu diesem verbindungslosen Dienst ist die ATM-Technologie verbindungsorientiert. Sollen die für LANs entwickelten Protokolle der höheren Schichten in auf der Basis eines ATM-Netzes emulierten LANs benutzt werden, müssen in diesem ATM-Netz die Eigenschaften des verbindungslosen MAC-Dienstes erbracht werden. Die LAN-Emulation gemäß der obengenannten Spezifikation realisiert den MAC-Dienst im lokalen ATM-Netz und definiert damit ein einzelnes emuliertes LAN, im folgenden ELAN genannt. In diesem ELAN können die üblichen LAN-Protokolle wie LLC, TCP/IP, SPX/IPX oder TP/CLNP benutzt werden.

Die LAN-Emulation unterstützt die beiden am häufigsten verwendeten LAN-Standards, nämlich Ethernet gemäß IEEE 802.3 und Token-Ring gemäß IEEE 802.5, wobei bei Token-Ring drei Rahmenlängen unterstützt werden. Die Adressierung jeder LAN-Station erfolgt anhand einer weltweit eindeutigen Ziel-MAC-Adresse. Zur Übertragung von Informationen zwischen LANs werden von einer höheren Schicht übergebenen. Token-Ring-LANs verwenden zur Beschreibung des Informationsweges zusätzlich zu MAC-Adressen sogenannte Route Descriptors im Rahmenkopf. Anhand eines solchen Descriptors kann der Rahmen innerhalb von Token-Ring-LANs zum Ziel befördert werden.

Im folgenden wird nur von MAC-Adressen gesprochen.

Zur Emulation eines LAN in einem ATM-Netz muß die LAN-Emulation u.a. Ziel-MAC-Adressen in Ziel-ATM-Adressen auflösen, Multicast und Broadcast realisieren, also eine Verteilung von Information an mehrere oder an alle Teilnehmer, sowie die Übertragung von LAN-Emulation-Rahmen in der richtigen Reihenfolge sicherstellen. Die LAN-Emulation hat eine Client-Server-Konfiguration. Die Clienten-Seite wird LAN-Emulation-Client LEC genannt und die Server-Seite wird LAN-Emulation-Service genannt. Der LAN-Emulation-Service besteht aus LAN-Emulation-Server LES, Broadcast-and-Unknown-Server BUS und LAN-Emulation-Configration-Server LECS. Der LAN-Emulation-Client bekommt von einer übergeordneten Schicht, beispielsweise der LLC-Schicht, die Ziel-MAC-Adresse und muß die entsprechende ATM-Adresse finden, um daraufhin den Aufbau einer direkte ATM-Verbindung zum Ziel durch Signalisierung zu veranlassen. Die Signalisierung kann hierbei beispielsweise nach der ITU-T-Empfehlung Q.2931/Q.2971 erfolgen. Ein LAN-Emulation-Client kann in der Software oder in der Hardware der Stationen realisiert sein, die an der LAN-Emulation teilnehmen.

Ein LAN-Emulation-Server LES unterhält eine Tabelle mit allen MAC-Adressen, die im emulierten LAN beispielsweise im Rahmen einer Konfigurierung angemeldet sind, und mit den entsprechenden ATM-Adressen. Zwischen den LAN-Emulation-Clienten und dem LAN-Emulation-Server erfolgt die Kommunikation nach einem LAN-Emulation-Adressenauflösungsprotokoll, das entsprechend der englischen Bezeichnung LAN Emulation Address Resolution Protocoll mit LE_ARP bezeichnet wird. Kennt ein LAN-Emulation-Client die Ziel-ATM-Adresse einer Ziel-MAC-Adresse nicht, so sendet er eine Anfrage mit der Ziel-MAC-Adresse an den LAN-Emulation-Server. Eine solche Anfrage zur Adreßauflösung wird mit LE_ARP Request bezeichnet. Falls der LES die Ziel-ATM-Adresse auflösen kann, antwortet er mit LE_ARP Response. Wenn nicht, schickt er die Anfrage an weitere LAN-Emulation-Clienten.

Erhält ein LAN-Emulation-Client eine Adreßauflösungsantwort LE_ARP Response, so baut er zu der hierin enthaltenen ATM-Adresse eine ATM-UBR-Verbindung auf und sendet einen Unicast-Rahmen. UBR bedeutet hierbei "Unspecified Bit Rate", gibt also an, daß die Bitrate nicht festgelegt ist. Ein Unicast-Rahmen ist ein Informations- bzw. Datenpaket mit einem einzigen Adressaten. Bei der Übertragung von Rahmen innerhalb eines ELAN wird zwischen Unicast-Rahmen an einen Empfänger und Multicast- oder Broadcast-Rahmen an mehrere oder alle Empfänger unterschieden. Eine ATM-UBR-Verbindung bleibt ab dem letzten gesendeten Rahmen für 20 Minuten bestehen, damit weitere Rahmen auf einfache Weise zum selben Empfänger geschickt werden können. Hierzu wird auf die Variable C12 in Punkt 5.1.1 der LAN-Emulation-Spezifikation verwiesen. Im LAN-Emulation-Client werden mit Hilfe eines Cash-Mechanismus die Ziel-ATM-Adressen von Ziel-MAC-Adressen eine bestimmte Zeit lang gespeichert. Falls keine Verbindung zu einem Ziel-LAN-Emulation-Client besteht, die Ziel-ATM-Adresse jedoch im Sender-LAN-Emulation-Client bekannt ist, kann ein Sender-LAN-Emulation-Client LEC eine Verbindung ohne Adreßauflösungsanfrage aufbauen und einen Unicast-Rahmen senden.

Multicast-Rahmen an eine Gruppe von Teilnehmern bzw. LAN-Emulation-Clienten und Broadcast-Rahmen an alle Teilnehmer bzw. LAN-Emulation-Client LECen werden an den obengenannten BUS geschickt. Innerhalb eines ELAN unterhält der BUS Verbindungen zu allen LEC die angekommenen Rahmen an die Adressaten.

Jeder LAN-Emulation-Client kann bei der Konfigurierung als sogenannter Proxy-LEC angemeldet werden. Ein Proxy-LAN-Emulation-Client erhält alle Adreßauflösungsanfragen LE_ARP Request, die ein LES nicht auflösen kann. Außerdem erhält ein Proxy-LEC alle Multicast- und alle Broadcast-Rahmen.

Der Vorteil der ATM-Technologie ist u.a. darin zu sehen, daß direkte Verbindungen mit flexibler Bandbreite zwischen den Kommunikationspartnern aufgebaut werden können. Solche direkte Verbindungen garantieren minimale Zeitverzögerungen und eine hohe Informationsübertragungsrate. Dieser Vorteil der ATM-Technologie wird in der LAN-Emulation für Unicast-Rahmen genutzt. In dem Artikel "Interconnect Emulated LANs with White Area ATM Networks" von Peter T.P. Chang und Bill Ellington, ATM Forum Technical Committee vom 29. November - 2. Dezember 1994 sind verschiedene Konzepte bekannt, lokale ATM-Netze, wie z.B. ELANs über ein Weitverkehrs-ATM-Netz zu verbinden. In einem ersten Konzept sind hierbei mehrere ELANS an ein Weitverkehrs-ATM-Netz angeschlossen, wobei die Adreßauflösung und die Datenübertragung über einen einzigen LAN-Emulation-Server und einen einzigen BUS vorgenommen werden. Dieses Konzept führt zu einem enormen Verkehrsaufkommen zur Realisierung der Broadcast-Funktion. Die Adreßauflösungsverzögerungszeiten in einem solchen Netz sind extrem hoch.

Ein weiteres Konzept sieht vor, ELANs jeweils über Fernbrücken (Remote Bridges) an ein Weitverkehrs-ATM-Netz anzuschließen. Hierbei sind entweder alle Fernbrücken über permanente virtuelle Leitungen PVC (Permanent Virtual Circuit) miteinander verbunden oder die Fernbrücken sind unter Verwendung eines Adreßauflösungs-Servers mit Hilfe einer ATM-Signalisierung dynamisch miteinander verbunden. Hierbei sind die Übertragungsmöglichkeiten durch die Übertragungsmöglichkeiten der Fernsteuerbrücken und die Bandbreite der permanenten virtuellen Leitungen zwischen zwei Fernsteuerbrücken beschränkt. Die Fernbrücken werden mit Broadcast-Rahmen von Broadcast and Unknown Servern ferner ELANs überflutet, sofern deren Fernbrücke jeweils nicht die Adresse der den Ziel-MAC-Adressen zugeordneten Fernbrücken kennt.

Ein weiteres Konzept sieht vor, anstelle der Fernbrücken Brouter vorzusehen, eine Mischung aus Brücke und Rrouter. Diese Brouter erfüllen in diesem Fall auf der ELAN-Seite die Funktion einer LAN-Emulations-Brücke und auf der Seite des ATM-Weitverkehrsnetzes die Funktionen eines Routers. Dadurch werden die Broadcast-Probleme reduziert, eine Beschränkung der Übertragungsmöglichkeiten über das ATM-Weitbereichsnetz durch die Übertragungsmöglichkeiten der Brouter und der permanenten virtuellen Leitungen bleibt jedoch bestehen.

Ein weiteres Konzept sieht vor, die LAN-Emulation-Server der einzelnen ELANs sowie die BUS der einzelnen ELANs miteinander durch Direktverbindungen zu verbinden. Dies führt jedoch zu einer großen Anzahl von Direktverbindungen und zu einem hohen Verkehrsaufkommen zwischen den LAN-Emulation-Servern und den BUS der einzelnen ELANs. Das Verkehrsaufkommen steigt hierbei linear mit der Anzahl der verbundenen ELANs.

Ein weiteres Konzept sieht vor, die LAN-Emulation-Server der einzelnen ELANs sowie die BUS der einzelnen ELANs über Direktverbindungen an einen übergeordneten LAN-Emulation-Server bzw. einen übergeordneten BUS zu verbinden. Dies führt jedoch ebenfalls zu einer großen Anzahl von Direktverbindungen und zu einem hohen Verkehrsaufkommen. Die Mehrschichtigkeit von BUS und übergeordnetem BUS bzw. LES und übergeordnetem LES führt außerdem zu Zeitverzögerungen.

Diese Aufgabe wird gelöst durch ein Verfahren mit den Merkmalen des Anspruchs 1. Günstige Ausgestaltungen sind Gegenstand von Unteransprüchen.

Wenn innerhalb eines ELAN Information von einem LAN-Emulation-Client zu einem anderen LAN-Emulation-Client übertragen werden soll, veranlaßt der Ursprungs-LEC üblicherweise einen ATM-Verbindungsaufbau zu dem Ziel-LEC. Hierzu ist die Ziel-ATM-Adresse erforderlich. Der Ursprungs-LEC kennt von höheren Schichten eine Ziel-MAC-Adresse. Außerdem kann in seinem Speicher zu der Ziel-MAC-Adresse eine Ziel-ATM-Adresse abgelegt sein. Falls keine Ziel-ATM-Adresse abgelegt ist, gibt der Ursprungs-LEC normgemäß bei Unicast-Übertragung an einen LAN-Emulation-Server des ELAN eine Adreßauflösungsanfrage LE_ARP_Request. Wenn der der Ziel-MAC-Adresse zugeordnete Client nicht zu dem ELAN dieses LAN-Emulation-Server gehört, kann dieser LAN-Emulation-Server die ATM-Adresse nicht auflösen, die Adreßauflösungsanfrage also nicht beantworten.

Erfindungsgemäß sind das erste und das zweite ELAN an ein einen verbindungslosen Dienst wie z.B. SMDS (Switched Multimegabit Data Service) oder CBDS (Connectionless Broadband Data Service) bereitstellendes Weitverkehrsnetz (regional und/oder global) angeschlossen. Der Einfachheit halber wird im folgenden und in den Patentansprüchen, sofern keine anderslautenden Erläuterungen vorgenommen werden unter Weitverkehrsnetz immer ein einen verbindungslosen Dienst bereitstellendes Weitverkehrsnetz - also ein CLS-Weitverkehrsnetz (regional und/oder global) - gemeint.

Ist die aufzulösende Ziel-MAC-Adresse bei Unicast-Betrieb einem LAN-Emulation-Client eines zweiten ELAN zugeordnet, so wird erfindungsgemäß die Informationsübertragung mit den folgenden Verfahrensschritten ermöglicht:
- Veranlassen eines Verbindungsaufbaus zwischen Ursprungs-LEC und Ziel-LEC über ein Weitverkehrs-ATM-Netz unter Verwendung der Ziel-ATM-Adresse; und
- Übermitteln der Informationspakete über das Weitverkehrs-ATM-Netz.

In einer Ausgestaltungsform der Erfindung kann hierzu die Ziel-ATM-Adresse durch Übertragung einer Adreßauflösungsanfrage des Ursprungs-LEC über ein einen verbindungslosen Dienst bereitstellendes CLS-Weitverkehrsnetz zum zweiten ELAN und Auflösen der Ziel-MAC-Adresse im zweiten ELAN in die zugehörige ATM-Adresse ermittelt werden. Daraufhin kann ein Verbindungsaufbau zwischen Ursprungs-LEC und Ziel-LEC über ein dem ersten ELAN und dem zweiten ELAN übergeordnetes ATM-Netz unter Verwendung der ermittelten Ziel-ATM-Adresse veranlaßt werden.

In einem Ausführungsbeispiel wird die ermittelte ATM-Adresse als Adreßauflösungsantwort über das CLS-Weitverkehrsnetz zum ersten ELAN und dort zum Ursprungs-LEC übertragen und der Ursprungs-LEC veranlaßt einen Verbindungsaufbau zum Ziel-LEC.

Vorzugsweise kann hierbei die Ziel-ATM-Adresse mit den folgenden Verfahrensschritten aufgelöst werden:
- Einkapseln der im ersten ELAN als ELAN-Rahmen vorliegenden Adreßauflösungsanfrage in ein Rahmenformat des CLS-Weitverkehrsnetzes mit einer der Ziel-MAC-Adresse zugeordneten E-164-Adresse im Rahmen-Kopfteil;
- Übergeben dieser eingekapselten Adreßauflösungsanfrage an das CLS-Weitverkehrsnetz und Übertragung zum zweiten ELAN;
- Entkapseln der eingekapselten Adreßauflösungsanfrage und Übergeben an einen LAN-Emulation-Server des zweiten ELAN im ELAN-Rahmenformat;
- Auflösen der Ziel-MAC-Adresse in eine zugehörige ATM-Adresse durch diesen Server des zweiten ELAN und Ausgabe einer Adreßauflösungsantwort;
- Einkapseln dieser Adreßauflösungsantwort in das Rahmenformat des CLS-Weitverkehrsnetzes und Übertragen zum ersten ELAN;
- Entkapseln der eingekapselten Adreßauflösungsantwort und Übergeben an den Ursprungs-LEC.

In einem anderen Ausführungsbeispiel wird zur Übertragung von Unicast-Rahmen bei unbekannter Ziel-ATM-Adresse eine ATM-Verbindung zwischen Sender und Empfänger nach dem folgenden Verfahren aufgebaut:
- Ermitteln der Ziel-ATM-Adresse durch Übertragung einer eine Verbindungsaufbauanfrageinformation enthaltenden Adreßauflösungsanfrage des Ursprungs-LEC über ein CLS-Weitverkehrsnetz zum zweiten ELAN und Auflösen der Ziel-MAC-Adresse durch einen Server des zweiten ELAN in die zugehörige ATM-Adresse;
- Übermitteln der Verbindungsaufbauanfrageinformation innerhalb des zweiten ELAN an den Ziel-LEC unter Verwendung der ermittelten Ziel-ATM-Adresse; und
- Veranlassen eines Verbindungsaufbaus zwischen Ursprungs-LEC und Ziel-LEC über ein dem ersten ELAN und dem zweiten ELAN übergeordnetes ATM-Netz durch den Ziel-LEC.

Ist die Übertragung von Unicast-Rahmen beabsichtigt, so wird gemäß der oben erwähnten 'LAN-Emulation over ATM-Specification' vom Ursprungs-LEC eine Adreßauflösungsanfrage an den LAN-Emulation-Server des lokalen ELAN gesendet. Da der LAN-Emulation-Server nur die lokalen ATM-Adressen kennt, kann er die Ziel-ATM-Adresse nicht auflösen. Der lokale LAN-Emulation-Server gibt daher die Adreßauflösungsanfrage des Ursprungs-LEC an alle im lokalen ELAN angemeldeten Proxy-LEC ab. In einer günstigen Ausgestaltung der Erfindung sind daher die einzelnen ELANs jeweils über einen speziellen LAN-Emulation-Client an das einen verbindungslosen Dienst bereitstellende CLS-Weitverkehrsnetz angeschlossen. Dieser Zugangs-LEC ist jeweils vorzugsweise als Proxy-LEC in seinem ELAN angemeldet.

Sind einer Ziel-MAC-Adresse mehrere Ziel-LECs zugeordnet, handelt es sich also um eine Multicast-MAC-Adresse, so werden erfindungsgemäß die Informationspakete vom Ursprungs-LEC über ein einen verbindungslosen Dienst bereitstellendes CLS-Weitverkehrsnetz zu den Ziel-LECen übertragen.
- Übertragung der Informationspakete an einen speziellen LAN-Emulation-Client mit Zugang zu einem einen verbindungslosen Dienst bereitstellenden Weitverkehrsnetz,
- Übergeben der einzelnen Informationspakete an eine Umsetzungsfunktion mit einem Adress-Speicher für einander zugeordnete Gruppen-Adressen des ELAN und E.164-Adressen des CLS-Weitverkehrsnetzes und mit einem Speicher für eine dem Übergang vom CLS-Weitverkehrsnetz zu dieser Umsetzungsfunktion zugeordneten E.164-Adresse,
- Übergeben der Informationspakete gemeinsam mit der der Ziel-MAC-Adresse zugehörigen E.164-Adresse (ggf. globale E.164-Gruppenadresse aller ELANs) an das CLS-Weitverkehrsnetz,
- Einkapseln der Informationspakete in ein Rahmenformat des CLS-Weitverkehrsnetzes,
- Übermitteln der Informationspakete über das einen verbindungslosen Dienst bereitstellende Weitverkehrsnetz zum ELAN des Ziel-LAN-Emulation-Client,
- Entkapseln der eingekapselten Informationspakete und Übergeben der entkapselten Informationspakete an einen speziellen LAN-Emulation-Client des zweiten ELAN mit Zugang zum einen verbindungslosen Dienst bereitstellenden Weitverkehrsnetz durch eine Umsetzungsfunktion, und
- Übermittlung der Informationspakete an den Ziel-LAN-Emulation-Client.

Sind die einzelnen ELANs jeweils über einen Zugangs-LEC an das einen verbindungslosen Dienst bereitstellende Netz angeschlossen, so wird der Übergang zwischen einem ELAN und dem CLS-Weitverkehrsnetz vorzugsweise durch eine Übergangsfunktion IWF (Inter Working Function) gebildet, die zwischen dem CLS-Weitverkehrsnetz (T-Referenzpunkt) und einem Zugangs-LEC des jeweiligen ELAN angeordnet ist. Eine solche Übergangsfunktion kann eine Brücke (Bridge) oder ein Router sein.

Eine Brücke als Übergangsfunktion hat beispielsweise einen Adress-Speicher für einander zugeordnete MAC-Adressen oder Gruppen-Adressen des ELAN und E.164-Adressen des CLS-Weitverkehrsnetzes und einen Speicher für eine dem Übergang vom CLS-Weitverkehrsnetz zur Brücke zugeordnete E.164-Adresse.

Eine einfache Ausführungsform einer solchen Brücke kann vorsehen, daß Multicast-Daten-Rahmen mit der E.164-Adresse eines Gruppenadreß-Agenten GAA des CLS-Weitverkehrsnetzes an das CLS-Weitverkehrsnetz weitergeleitet werden. Vorzugsweise übergibt die Umsetzungsfunktion auch die der Ursprungs-MAC-Adresse zugeordnete E.164-Adresse. Vom CLS-Weitverkehrsnetz kommende Rahmen werden an die Schnittstelle (Schicht LEC) zum ELAN übergeben.

Nachfolgend wird die Erfindung an Hand besonderer Ausgestaltungen unter Bezugnahme auf die Figur näher erläutert:

Figur 1 zeigt die Übertragung von Multicast-Rahmen bzw. Broadcast-Rahmen durch das CLS-Netz.

Fig. 2 zeigt die Übertragung von Unicast-Daten-Rahmen durch das CLS-Netz, insbesondere die Auflösung der Unicast-Ziel-MAC-Adresse durch das CLS-Netz und Aufbau einer ATM-Verbindung vom Sender zum Empfänger.

Der Connectionless Service oder CLS-Dienst kann mit verschiedenen Technologien (z.B. DQDB, ATM, FR) realisiert werden. Der Dienst wird in der ITU-T Empfehlung F.812 beschrieben. Bekannte Realisierungen sind der Switched Multi-megabit Data Service (SMDS), beschrieben in Spezifikationen von Bellcore, SMDS Interest Group (SIG) und European SMDS Interest Group (ESIG), sowie der Connectionless Broadband Data Service (CBDS), definiert in ETSI Standard 300 217 und ITU-T Empfehlung I.364. Durch diese Realisierungen fand der CLS weltweit große Verbreitung. Anlagen, die diesen Dienst anbieten, werden von vielen Herstellern im Bereich der Telekommunikation gebaut.

Der Dienst ist für weltweite Datenkommunikation gedacht. Dabei werden jedem Zugang zum CLS-Netz eine oder mehrere CLNAP-Adressen nach E.164 ( E.164-Adresse) zugeteilt (CLNAP=Connectionless Network Access Protocol).

Einem ankommenden Multicast-Rahmen wird anhand seiner Ziel-MAC-Adresse durch statische oder dynamische Zuordnungstabellen eine Ziel-CLNAP-Adresse zugefügt (Einkapseln) und der eingekapselte Rahmen (auch CLS-Paket genannt) wird zu dieser CLNAP-Adresse geleitet.

Zum besseren Verständnis werden im folgenden die Adressen im ELAN Unicast- bzw. Multicast/Broadcast-MAC-Adressen genannt, im CLS-Netz wird dagegen von individuellen und Gruppenadressen gesprochen.

Jedes CLS-Paket wird im CLS-Netz unabhängig von den anderen übertragen. Das Netz sorgt für die richtige Reihenfolge der CLS-Pakete.

Innerhalb des CLS-Netzes werden unter bestimmten Voraussetzungen (siehe prETS 300 478, 300 479) die CLNAP-PDUs in CLNIP-PDUs (CLNIP = Connectionless Network Interface Protocol) eingekapselt.

Die Behandlung von Multicast-Verkehr wird im CLS-Netz in folgender Weise realisiert. Sogenannte Group-Address-Agents (GAAs) enthalten Tabellen mit den individuellen CLNAP-Adressen, die zu einer CLNAP-Gruppenadresse gehören. Jedes CLS-Paket, das eine Gruppenadresse als Zieladresse hat, wird zum entsprechenden Group-Address-Agent geleitet. Falls eingekapselt wurde, steht in den Feldern "CLNAP Destination Address" und "CLNIP Destination Address" die gleiche Gruppenadresse. Der GAA löst die Gruppenadresse des angekommenen CLS-Pakets in individuelle CLNIP-Adressen auf, erzeugt Kopien des ursprünglichen Pakets und fügt jeder Kopie die entsprechende individuelle Adresse als CLNIP-Adresse hinzu. Das "CLNAP Destination Address"-Feld bleibt unverändert, damit der Empfänger die ursprüngliche Gruppenadresse erfahren kann.

Die LAN-Emulation beschreibt ein einzelnes emuliertes LAN. Für die Kopplung von ELANs sind zur Zeit keine Lösungen bekannt. Aus Leistungsgründen können die in der LAN-Emulation beschriebenen Mechanismen zur Adressenauflösung und zur Realisierung von Multicast/Broadcast im WAN Bereich nicht einfach übernommen werden.

Nachstehend werden Methoden zur Kopplung von ELANs unter Anwendung der Erfindung beschrieben:

Ein erstes Beispiel behandelt die Übertragung von Multicast-Rahmen bei mindestens einem außerhalb des ELAN des Ursprungs-LEC LEC A befindlichem Ziel-LEC LEC B, LEC C und sieht die Übertragung von Multicast-Rahmen durch ein einen verbindungslosen Dienst bereitstellendes Netz und danach einen ATM-Verbindungsaufbau vom Sender zum Empfänger vor. Multicast-Rahmen schließt hierbei immer auch Broadcast-Rahmen ein.

Ein Vorteil der LAN-Emulation ist der Aufbau einer direkten ATM-Verbindung zwischen Sender und Empfänger, wie er in der LAN-Emulation Specification mit "Data Direct VCC" bezeichnet wird. Deshalb schlägt die Weiterbildung der Erfindung dieses Beispiels vor, die Ziel-MAC-Adresse für den Unicast-Verkehr unter Verwendung eines einen verbindungslosen Dienst bereitstellenden Netzes wie z.B. SMDS oder CBDS in die ATM-Adresse aufzulösen und dann eine direkte ATM-Verbindung zum Ziel aufzubauen.

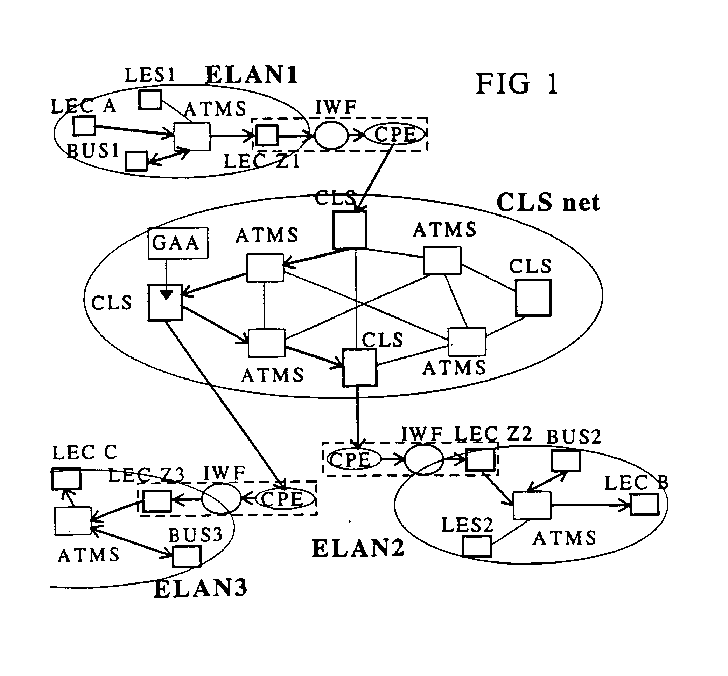

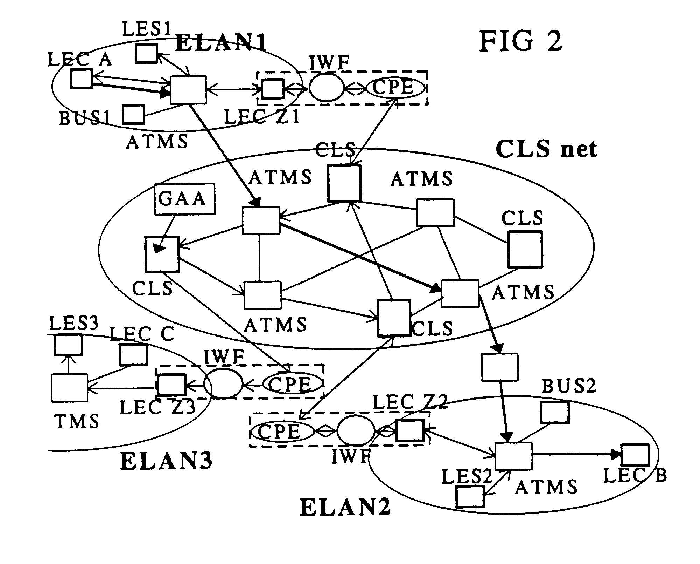

Die Figuren 1 und 2 zeigen in gleicher Weise drei ELANs ELAN1, ELAN2 und ELAN3, jeweils mit einem LAN-Emulation-Server LES, einer ATM-Vermittlungseinrichtung ATMS, einem LAN-Emulation-Client LEC A, LEC B, LEC C und einem speziellen LAN-Emulation-Client LEC Z1, LEC Z2, LEC Z3, der nachstehend als Zugangs-LEC bezeichnet wird und der dem jeweiligen ELAN ELAN1, ELAN2 bzw. ELAN3 über eine Kundenanschlußeinheit CPE (Customer Premises Equipment) Zugang zu einem ebenfalls dargestellten, einen verbindungslosen Dienst bereitstellenden Netz CLSnet ermöglicht. Hierbei ist jeder Kundenanschlußeinheit CPE eine Übergangsfunktion (Interworking Function IWF) zugeordnet zum Umsetzen einer Ziel-MAC-Adresse in eine E.164-Adresse der Kundenanschlußeinrichtung CPE des ELAN, in dem der LAN-Emulation-Client sich befindet, dem die Ziel-MAC-Adresse zugeordnet ist, oder zum Umsetzen einer E.164-Gruppenadresse aller ELANs. In den Ausführungsbeispielen gemäß den Figuren 1 und 2 ist das einen verbindungslosen Dienst bereitstellende Netz CLSnet mit Hilfe eines übergeordneten (räumlich übergeordnet, also regional oder global) ATM-Netzes mit ATM-Vermittlungseinrichtungen ATMS realisiert. Die Realisierungsart des einen verbindungslosen Dienst bereitstellenden Netzes CLSnet hat jedoch keinen Einfluß auf die Erfindung.

In der Figur 1 sind außerdem der Broadcast-and-Unknown-Server BUS1, BUS2, BUS3 des ELAN1, ELAN2 und ELAN3 dargestellt. Wie durch einen übergreifenden Rahmen dargestellt, bilden in dem dgezeigten Beispiel jeweils Zugangs-LEC LEC Z1, LEC Z2 bzw. LEC Z3, Umsetzungsfunktion IWF und Kundenanschlußeinrichtung CPE eine Brücke, deren Brückenfunktion die Umsetzungsfunktion IWF ist.

Das einen verbindungslosen Dienst bereitstellende Netz CLSnet enthält einen verbindungslosen Dienst bereitstellende Server (Connectionless Server) CLS und einen Gruppenadreßagenten GAA (Group-Address-Agent).

In Fig. 1 ist der Verbindungsaufbau für Multicast-Daten vom LAN-Emulation-Client LEC A zum LAN-Emulation-Client LEC B und zum LEC LEC C jeweils durch eine fette Linie mit Pfeil in Richtung des Verbindungsaufbaus angedeutet.

Eine einfache Kopplung von ELANs bezüglich der Übertragung von Multicast- bzw. Broadcast-Rahmen kann also realisiert werden, wenn alle Multicast- bzw. Broadcast-Daten-Rahmen, die an LAN-Emulation-Clienten außerhalb des ELANs geliefert werden sollen, über das CLS-Netz (einen verbindungslosen Dienst bereitstellendes Netz) transportiert werden. Dafür ist ein LAN-Emulation-Client LEC in jedem ELAN erforderlich, der über eine Interworking Function Zugang zum CLS-Netz hat (siehe LAN-Emulation-Clienten LEC Z1, LEC Z2, LEC Z3 in Figur 1).

Wenn beispielsweise LAN-Emulation-Client LEC A einen Multicast-Rahmen senden will, schickt er diesen Multicast-Rahmen an den BUS BUS1, der den Rahmen abhängig von der Ausgestaltungsform des BUS entweger an bestimmte LECs (intelligenter BUS) oder an alle LECs (nicht intelligenter BUS) verteilt. In jedem Fall muß hierbei der Zugangs-LEC LEC Z1 eine Kopie des Rahmens erhalten.

Der Zugang-LEC LEC Z1 übergibt den Rahmen an eine Umsetzungsfunktion (Interworking Function IWF), die weiter unten noch näher beschrieben wird. Die Umsetzungsfunktion IWF transformiert jeden angekommenen Multicast-Rahmen in das Format eines CLS-Pakets (CLNAP-Paket) und übergibt ihn an das CLS-Netz. Die Umsetzungsfunktion IWF entnimmt einer Tabelle die der Gruppenadresse zugehörigen individuellen E.164-Adressen (ggf. globale E.164-Gruppenadresse) und fügt diese dem Rahmen bei.

Das CLS-Netz transportiert das Paket zum Ziel-CPE des ELAN2, das den ursprünglichen Daten-Rahmen auspackt und über die Umsetzungsfunktion an den Zugang LEC (LEC Z2) weiterleitet. Dieser LAN-Emulation-Client LEC Z2 überträgt den Multicast-Daten-Rahmen an den BUS BUS2, der ihn an den Ziel-LEC LEC B weiterleitet. Außerdem transportiert das CLS-Netz das Paket zum Ziel-CPE des ELAN3, das den ursprünglichen Daten-Rahmen auspackt und über die Umsetzungsfunktion IWF an den Zugang LEC (LEC Z3) weiterleitet. Dieser LAN-Emulation-Client LEC Z3 überträgt den Multicast-Daten-Rahmen an den BUS BUS3 und dieser an den Ziel-LEC LEC C.

Falls die IWF die entsprechenden E.164-Adressen micht kennt, werden die die Multicast/Broadcast-Rahmen enthaltenden CLS-Pakete mit der globale E.164-Gruppenadresse an das CLS-Netzes übergeben.

In Fig. 1 ist zu erkennen, daß Multicast-Rahmen vom LAN-Emulation-Client LEC A des ELAN1 über die ATM-Vermittlungseinrichtung ATMS dieses ELAN1 zum BUS BUS1 und dann zum Zugangs-LEC LEC Z1 übertragen werden. Vom Zugangs-LEC LEC Z1 gehen die Multicast-Rahmen zur Kundenanschlußeinrichtung CPE, werden dort jeweils in eine andere Form umgesetzt und über verbindungslose Server CLS an die Kundenanschlußeinrichtung CPE des ELAN3 sowie über eine weitere ATM-Vermittlungseinrichtung ATMS und einen weiteren verbindungslosen Server CLS an die Kundenanschlußeinrichtung CPE des ELAN2 übermittelt. Dann werden die Multicast-Rahmen in jedem der ELANs ELAN2 und ELAN3 über einen Zugangs-LEC LEC Z2, LEC Z3 und die ATM-Vermittlungseinrichtung ATMS des ELAN an den BUS des ELAN übertragen. Der BUS des ELAN2 kann die Multicast-Rahmen über die ATM-Vermittlungseinrichtung ATMS an den Ziel-LAN-Emulation-Clienten LEC B übermitteln und der BUS des ELAN3 kann die Multicast-Rahmen über die ATM-Vermittlungseinrichtung ATMS an den Ziel-LAN-Emulation-Clienten LEC C übermitteln.

Wenn der LAN-Emulation-Client LEC A zur Übertragung von Unicast-Rahmen an den LEC LEC B des ELANs ELAN2 die Ziel-ATM-Adresse kennt, kann er über ein durch eine Vielzahl von ATM-Vermittlungseinrichtungen ATMS in Fig. 2 dargestelltes ATM-Netz eine direkte Verbindung zum Ziel-LAN-Emulation-Clienten LEC B im ELAN2 aufbauen, wie sie durch fette Linien zwischen dem LAN-Emulation-Clienten LEC A und dem LAN-Emulation-Clienten LEC B sowie dazwischengeschalteten ATM-Vermittlungseinrichtungen ATMS in Figur 2 dargestellt ist.

Das nachstehende Beispiel gemäß Figur 2 behandelt die Übertragung von Unicast-Rahmen bei nicht bekannter Ziel-ATM-Adresse und sieht die Übertragung von Adreßauflösungsanfragen bzw. Adreßauflösungsantworten LE_ARP Request/Response durch ein einen verbindungslosen Dienst bereitstellendes Netz und danach einen ATM-Verbindungsaufbau vom Sender zum Empfänger vor.

Ein LAN-Emulation-Client LEC Z1, LEC Z2 bzw. LEC Z3 jedes emulierten LAN ELAN1, ELAN2, ELAN3 hat Zugang (Über eine CPE) zum einen verbindungslosen Dienst bereitstellenden Netz CLSnet. Falls der LAN-Emulation-Client LEC A des ELAN1 einen Unicast-Rahmen an den LAN-Emulation-Clienten LEC B des ELAN2 senden möchte, jedoch die Ziel-ATM-Adresse nicht kennt, schickt er eine Adreßauflösungsanfrage LE_ARP Request an den LAN-Emulation-Server LES des ELAN1. Wenn der LAN-Emulation-Server LES des ELAN1 keinen Eintrag für die Ziel-MAC-Adresse in seiner Tabelle hat, muß er diese Adreßauflösungsanfrage LE_ARP Request an den Zugangs-LEC LEC Z1 des ELAN1 weitergeben. Dies kann beispielsweise durch Anmeldung des Zugangs-LEC LEC Z1 als Proxy beim LAN-Emulation-Server LES des ELAN1 realisiert sein.

Der Zugangs-LEC LEC Z1 des ELAN1 ist wie die übrigen Zugangs-LECs LEC Z2, LEC Z3 der anderen emulierten ELANs ELAN2 und ELAN3 jeweils an eine Kundenanschlußeinrichtung CPE eines einen verbindungslosen Dienst bereitstellenden Netzes CLSnet angeschlossen. Der Übergang vom Zugangs-LEC LEC Z1, LEC Z2, LEC Z3 zum einen verbindungslosen Dienst bereitstellenden Netz CLSnet wird hierbei mit Hilfe einer oben erwähnten und weiter unten detaillierter beschriebenen Übergangsfunktion IWF (Interworking Function) realisiert, die jede zu einem Zugangs-LEC LEC Z1, LEC Z2, LEC Z3 ankommende Adreßauflösungsanfrage LE_ARP Request bzw. Adreßauflösungsantwort LE_ARP Response, für die sie einen Eintrag (E.164-Adresse) für die Ziel-MAC-Adresse hat, in das Format eines Paketes des einen verbindungslosen Dienst bereitstellenden Netzes CLSnet (CLNAP-Paket) eingekapselt und diese Anfrage bzw. Antwort an das einen verbindungslosen Dienst bereitstellende Netz CLSnet übergibt.

Falls die Übergangsfunktion keinen Eintrag hat, kann sie entweder den entsprechenden Adreßauflösungsanfragerahmen bzw. Adreßauflösungsantwortrahmen verwerfen oder diesen Rahmen mit einer E.164-Gruppenadresse versehen, durch die alle emulierten LANs erreichbar sind, die einen Zugang zum einen verbindungslosen Dienst bereitstellenden Netz CLSnet haben. Im letztgenannten Fall löst ein Gruppenadressenagent GAA (Group-Address-Agent) diese Gruppenadresse in die individuellen E.164-Adressen der einzelnen Kundenanschlußeinrichtungen CPE der einzelnen ELANs ELAN1, ELAN2, ELAN3 auf.

Hierbei ist es besonders günstig, wenn die E.164-Gruppenadresse, die von einer Übergangsfunktion zu einer Adreßauflösungsanfrage bzw. Adreßauflösungsantwort hinzugefügt wird jeweils die E.164-Adressen der Kundenanschlußeinrichtungen CPE aller emulierten LANs ELAN2, ELAN3 enthält, die an das einen verbindungslosen Dienst bereitstellende Netz CLSnet angeschlossen sind mit Ausnahme der E.164-Adresse der Kundenanschlußeinrichtung des eigenen ELAN ELAN1.

Der Gruppenadressenagent GAA löst die E.164-Gruppenadresse auf und schickt Kopien des Paketes mit der Adreßauflösungsanfrage LE_ARP Request an die genannte Gruppe der Kundenanschlußeinrichtungen CPE der einzelnen ELANs ELAN2, ELAN3. Dadurch erhalten alle Zugangs-LECs LEC Z2, LEC Z3 die Adreßauflösungsanfrage LE_ARP Request über die Übergangsfunktion. Jeder Zugangs-LEC LEC Z2, LEC Z3 erkennt den Rahmentyp als Adreßauflösungsanfrage und schickt den Rahmen daher an den LAN-Emulation-Server LES seines emulierten LAN ELAN2 bzw. ELAN3. Üblicherweise kann irgendein LAN-Emulation-Server LES die Unicast-Ziel-MAC-Adresse des Ziel-LAN-Emulation-Clienten LEC B in die ATM-Adresse auflösen.

Das Zurücksenden einer Adreßauflösungsantwort wird dann besonders günstig gestaltet, wenn der Adreßauflösungsanfrage LE_ARP Request beim Einkapseln durch die Übergangsfunktion die E.164-Adresse der Kundenanschlußeinrichtung CPE des Ausgangs-ELAN ELAN1 hinzugefügt wird, wenn beim Entkapseln der Adreßauflösungsanfrage in der Kundenzugangseinrichtung CPE des ELAN2 die Ausgangs-E.164-Adresse der Adreßauflösungsanfrage gespeichert wird und diese Ausgangs-E.164-Adresse beim Einkapseln der vom LAN-Emulation-Server LES des ELAN2 über den Zugangs-LEC LEC Z2 an die Kundenanschlußeinrichtung CPE des ELAN2 übergebenen Adreßauflösungsantwort dem Kopfteil des über das einen verbindungslosen Dienst bereitstellende Netz CLSnet zu übertragenden Paketes hinzugefügt wird. Dadurch wird eine unmittelbare Übertragung der Adreßauflösungsantwort LE_ARP Response in eingekapselter Form durch das einen verbindungslosen Dienst bereitstellende Netz CLSnet zur Kundenanschlußeinrichtung CPE des ELAN1 ermöglicht.

Der Zugangs-LEC LEC Z1 im Ausgangs-ELAN ELAN1 leitet die Adreßauflösungsantwort LE_ARP Response, nachdem diese durch die Übergangsfunktion dekapsuliert worden ist, zum Ausgangs-LEC LEC A weiter. Nachdem der Ausgangs-LEC LEC A die Adreßauflösungsantwort LE_ARP Response mit der Ziel-ATM-Adresse erhalten hat, baut er eine unmittelbare ATM-Verbindung zum Ziel-LEC LEC B über ein regionales bzw. globales ATM-Netz auf.

Zur Realisierung des beschriebenen Verfahrens zum Koppeln von ELANs sind in der bestehenden LAN-Emulation Specification keine Änderungen erforderlich. Es muß lediglich jeweils ein Zugangs-LEC als Proxy beim LAN-Emulation-Server LES angemeldet werden und über eine Kundenanschlußeinrichtung CPE an ein einen verbindungslosen Dienst bereitstellendes Netz CLSnet angeschlossen sein. Dieser Zugangs-LEC erhält dann alle unbeantworteten Adreßauflösungsanfragen LE_ARP Request von dem LAN-Emulation-Server LES des entsprechenden emulierten LANs ELAN1, ELAN2, ELAN3.

Auch die bestehenden einen verbindungslosen Dienst bereitstellenden Netze wie z.B. SMDS oder CBDS müssen weder in ihren Standards noch in ihren Spezifikationen geändert werden. Es muß lediglich innerhalb dieses Netzes eine E.164-Gruppenadresse mit allen individuellen CPE-Adressen definiert werden, durch die emulierten LANs erreicht werden können. Hierbei kann ggf. ein Mechanismus vorgesehen sein, der eine Adressierung der sendenden Kundenanschlußeinheit CPE ausschließt.

Nachstehend wird allgemein zur Umsetzungsfunktion (Interworking Function) IWF Stellung genommen:

Die IWF realisiert die Verbindung zwischen dem "Zugang LEC" einerseits und dem CLS-Netz andererseits. Die IWF zur Kopplung von ELANs durch das CLS-Netz behandelt MAC- und E.164-Adressen und ist der Schicht 2 nach OSI-Referenzmodell zuzuordnen. Das heißt die IWF ist eine ELAN-CLS Brücke.

Wenn die IWF auch Routing Funktionen erfüllen soll, kann sie auch Schicht 3 Adressen (z.B. IP, IPX u.s.w.) behandeln. Das ist aber für die Realisierung erfindungsgemäßer Verfahren nicht erforderlich.

Ein erstes Realisierungsbeispiel für die Einbindung einer vorstehend beschriebene Umsetzungsfunktion zwischen einem ELAN und einem einen verbindungslosen Dienst bereitstellenden Weitverkehrsnetz für den Fall, daß der verbindungslose Dienst ein "Switched Multi-megabit Data Service" SMDS ist, und daß das Weitverkehrsnetz zur Realisierung dieses Dienstes ein "Distributed Queue Dual Bus" DQDB ist, kann vorsehen, daß weitverkehrsnetzseitig die Protokollschichten
- SMDS-Schnittstellenprotokollschicht 1, SIP_1,
- SMDS-Schnittstellenprotokollschicht 2, SIP_2, und
- SMDS-Schnittstellenprotokollschicht 3, SIP_3, vorgesehen
sind und daß die Umsetzungsfunktion weitverkehrsnetzseitig mit der SMDS-Schnittstellenprotokollschicht 3, SIP_3, kommuniziert.

Hierbei können beispielsweise ELAN-seitig die Protokollschichten
- Physikalische Schicht, PHY,
- Asynchron-Transfer-Modus-Schicht, ATM,
- Asynchron-Transfer-Modus-Anpassungsschicht-5, AAL5, und - LAN-Emulation-Client-Schicht, LEC,
vorgesehen sein, wobei die Umsetzungsfunktion ELAN-seitig mit der LAN-Emulation-Client-Schicht, LEC, kommuniziert.

In einem anderen Beispiel kann der verbindungslose Dienst ein "Switched Multi-megabit Data Service" (SMDS) sein und das CLS-Weitverkehrsnetz zur Realisierung dieses Dienstes ein ATM-Netz, wobei weitverkehrsnetzseitig die Protolollschichten Physikalische Schicht, PHY, Asynchrone-Transfer-Modus-Schicht, ATM, Segmentations-und-Assemblierungs-Subschicht der Asynchron-Transfer-Modus-Anpassungsschicht-3/4, AAL3/4SAR, und SMDS-Schnittstellenprotokollschicht 3, SIP_3, vorgesehen sind und wobei die Umsetzungsfunktion weitverkehrsnetzseitig mit der SMDS-Schnittstellenprotokollschicht 3, SIP_3, kommuniziert.

In einem weiteren Beispiel kann der verbindungslose Dienst ein "Connectionless Broadband Data Service" CBDS sein und das Weitverkehrsnetz zur Realisierung dieses Dienstes ein ATM-Netz, wobei weitverkehrsnetzseitig die Protokollschichten
- Physikalische Schicht, PHY,
- Asynchron-Transfer-Modus-Schicht, ATM,
- Asynchron-Transfer-Modus-Anpassungsschicht-3/4, AAL3/4, und
- Verbindungsloses-Netz-Zugriffs-Protokollschicht, CLNAP,
vorgesehen sind und wobei die Umsetzungsfunktion weitverkehrsnetzseitig mit der Verbindungsloses-Netz-Zugriffs-Protokollschicht, CLNAP, kommuniziert.

Nachstehend werden die Bedeutungen der verwendeten Abkürzungen in Form der Fachbegriffe gemäß den einschlägigen Normen angegeben:
- AAL: ATM Adaptation Layer
- ATM: Asynchronous Transfer Mode
- BUS: Broadcast and Unknown Server
- CBDS: Connectionless Broadband Data Service
- CLNAP: Connectionless Network Access Protocol
- CLNIP: Connectionless Network Interface Protocol
- CLNP: Connectionless Network Protocol
- CLS: Connectionless Service/Server
- CPE: Customer Premises Equipment
- CRC: Cyclic Redundancy Check
- DQDB: Distributed Queue Dual Bus
- DS1: Digital Signal 1
- DS3: Digital Signal 3
- E1: European transmission level 1
- E3: European transmission level 3
- ELAN: Emulated Local Area Network
- ESIG: European SMDS Interest Group
- ETSI: European Telecommunications Standards Institute
- FR: Frame Relay
- GAA: Group-Address-Agent
- IEEE: Institute of Electrical and Electronics Engineers
- IP: Internet Protocol
- IPX: Internetwork Packet Exchange
- ITU-T: International Telecommunications Union-Telecommunications
- IWF: Interworking Function
- L3_PDU: Level 3 Protocol Data Unit
- LAN: Local Area Network
- LE_ARP: LAN Emulation Address Resolution Protocol
- LEC: LAN Emulation Client
- LECS: LAN Emulation Configuration Server
- LES: LAN Emulation Server
- LLC: Logical Link Control
- MAC: Media Access Control
- OSI: Open Systems Interconnection
- PDU: Protocol Data Unit
- PHY: Physical Layer
- SIG: SMDS Interest Group
- SIP_3: SMDS Interface Protocol Layer 3
- SMDS: Switched Multi-megabit Data Service
- SPX: Sequenced Packet Exchange
- TCP: Transmission Control Protocol
- TP: Transport Protocol
- UBR: Unspecified Bit Rate
- WAN: Wide Area Network

## Patentansprüche

1. Verfahren zum Übermitteln von Informationspaketen zwischen einem Ursprungs-LEC eines ersten ELAN und einem Ziel-LEC eines zweiten ELAN, mit den folgenden Verfahrensschritten, falls die Informationspaketen an einen einzigen Ziel-LEC zu übermitteln sind:
- Veranlassen eines Verbindungsaufbaus zwischen Ursprungs-LEC und Ziel-LEC über ein Weitverkehrs-ATM-Netz unter Verwendung der Ziel-ATM-Adresse; und
- Übermitteln der Informationspakete über das Weitverkehrs-ATM-Netz;
und falls die Informationspakete an eine Gruppe von Ziel-LECs zu übermitteln sind, wobei mindestens ein Ziel-LEC zu einem zweiten ELAN gehört:
- Übermittlung der Informationspakete vom Ursprungs-LEC über ein einen verbindungslosen Dienst bereitstellendes CLS-Weitverkehrsnetz zu den Ziel-LECen.

2. Verfahren nach Anspruch 1, dadurch gekennzeichnet, daß falls die Informationspakete an eine Gruppe von Ziel-LECen zu übermitteln sind, nur die Informationspakete an die nicht zum ersten ELAN gehörenden Ziel-LECen über das CLS-Weitverkehrsnetz übermittelt werden.

3. Verfahren nach Anspruch 1 oder 2, dadurch gekennzeichnet, daß die an eine Gruppe von Ziel-LECen zu übermittelnden Informationspakete zu einem GAA des einen verbindungslosen Dienst bereitstellenden CLS-Weitverkehrsnetzes übermittelt werden, der GAA die Gruppenadresse auflöst und die Informationspakete an die ELANS der einzelnen Ziel-LECs übermittelt.

4. Verfahren nach Anspruch 1,
**dadurch gekennzeichnet,**
daß der Verbindungsaufbau zwischen Ursprungs-LEC und Ziel-LEC über ein Weitverkehrs-ATM-Netz mit den folgenden Verfahrensschritten veranlaßt wird:
- Ermitteln der Ziel-ATM-Adresse durch Übertragung einer Adreßauflösungsanfrage des Ursprungs-LEC über ein einen verbindungslosen Dienst bereitstellendes Weitverkehrsnetz zum zweiten ELAN und Auflösen der Ziel-MAC-Adresse im zweiten ELAN in die zugehörige ATM-Adresse;
- Veranlassen eines Verbindungsaufbaus zwischen Ursprungs-LEC und Ziel-LEC über ein dem ersten ELAN und dem zweiten ELAN übergeordnetes ATM-Netz unter Verwendung der ermittelten Ziel-ATM-Adresse.

5. Verfahren nach Anspruch 4,
**dadurch gekennzeichnet,**
daß der Verbindungsaufbau zwischen Ursprungs-LEC und Ziel-LEC über ein Weitverkehrs-ATM-Netz mit den folgenden Verfahrensschritten veranlaßt wird:
- die im zweiten ELAN durch Auflösen der Ziel-MAC-Adresse ermittelte ATM-Adresse wird als Adreßauflösungsantwort über das einen verbindungslosen Dienst bereitstellende Weitverkehrsnetz zum ersten ELAN und dort zum Ursprungs-LEC übertragen; und
- der Ursprungs-LEC veranlaßt über das übergeordnete ATM-Netz einen Verbindungsaufbau zum Ziel-LEC.

6. Verfahren nach Anspruch 1,
**dadurch gekennzeichnet,**
daß der Verbindungsaufbau zwischen Ursprungs-LEC und Ziel-LEC über ein Weitverkehrs-ATM-Netz mit den folgenden Verfahrensschritten veranlaßt wird:
- Ermitteln der Ziel-ATM-Adresse durch Übertragung einer eine Verbindungsaufbauanfrageinformation enthaltenden Adreßauflösungsanfrage des Ursprungs-LEC über ein einen verbindungslosen Dienst bereitstellendes Weitverkehrsnetz zum zweiten ELAN;
- Übermitteln der Verbindungsaufbauanfrageinformation innerhalb des zweiten ELAN an den Ziel-LEC;
- Veranlassen eines Verbindungsaufbaus zwischen Ursprungs-LEC und Ziel-LEC über ein dem ersten ELAN und dem zweiten ELAN übergeordnetes ATM-Netz durch den Ziel-LEC

## Claims

1. Method for transmitting information packets between a source LEC in a first ELAN, and a destination LEC in a second ELAN, comprising the following method steps, if the information packets are to be transmitted to a single destination LEC:
- causing a connection to be set up between the source LEC and the destination LEC via a long-distance traffic ATM network using the destination ATM address; and
- transmitting the information packets via the long-distance traffic ATM network;
and if the information packets are to be transmitted to a group of destination LECs, with at least one destination LEC belonging to a second ELAN:
- transmitting the information packets from the source LEC to the destination LECs via a CLS long-distance traffic network which provides a connectionless service.

2. Method according to Claim 1, characterized in that, if the information packets are to be transmitted to a group of destination LECs, only those information packets to the destination LECs which do not belong to the first ELAN are transmitted via the CLS long-distance traffic network.

3. Method according to Claim 1 or 2, characterized in that the information packets which are to be transmitted to a group of destination LECs are transmitted to a GAA in the CLS long-distance traffic network which provides a connectionless service, the GAA resolves the group address and transmits the information packets to the ELANs of the individual destination LECs.

4. Method according to Claim 1, characterized in that the setting up of a connection between the source LEC and the destination LEC via a long-distance traffic ATM network is initiated by the following method steps:
- determining the destination ATM address by transmitting an address resolution request from the source LEC to the second ELAN via a long-distance traffic network which provides a connectionless service, and resolving the destination MAC address in the second ELAN into the associated ATM address;
- initiating the setting up of a connection between the source LEC and the destination LEC via an ATM network, which is at a higher level than the first ELAN and the second ELAN, using the determined destination ATM address.

5. Method according to Claim 4,
characterized
in that the setting up of a connection between the source LEC and the destination LEC is initiated via a long-distance traffic ATM network, with the following method steps:
- the ATM address determined by resolution of the destination MAC address in the second ELAN is transmitted as an address resolution response, via the long-distance traffic network which provides a connectionless service, to the first ELAN, and from there to the source LEC; and
- the source LEC initiates the setting up of a connection to the destination LEC via the higher-level ATM network.

6. Method according to Claim 1,
characterized
in that the setting up of a connection between the source LEC and the destination LEC is initiated via a long-distance traffic ATM network, with the following method steps:
- determining the destination ATM address by transmitting an address resolution request, which contains connection setting-up request information, for the source LEC to the second ELAN via a long-distance traffic network which provides a connectionless service;
- transmitting the connection setting-up request information within the second ELAN to the destination LEC;
- initiating the setting up of a connection between the source LEC and the destination LEC, by the destination LEC, via an ATM network which is at a higher level than the first ELAN and the second ELAN.

## Revendications

1. Procédé pour la transmission de paquets de données entre un LEC source d'un premier ELAN et un LEC destinataire d'un deuxième ELAN, avec les étapes de procédé suivantes, pour le cas où les paquets de données sont transmis à un seul LEC destinataire:
- solliciter l'établissement, via un réseau ATM à grande distance, d'une communication entre le LEC source et le LEC destinataire en utilisant l'adresse ATM de destination, et
- transmettre les paquets de données à travers le réseau ATM à grande distance
et, pour le cas où les paquets de données sont transmis à un groupe de LECs destinataires, au moins un LEC destinataire faisant partie d'un deuxième ELAN:
- transmission des paquets de données du LEC source aux LEC destinataires à travers un réseau CLS à grande distance offrant un service en mode non connecté.

2. Procédé selon la revendication 1 caractérisé par le fait que, dans le cas où les paquets de données doivent être transmis à un groupe de LECs destinataires, seuls les paquets de données destinés aux LECs destinataires ne faisant pas partie du premier ELAN sont transmis à travers le réseau CLS à grande distance.

3. Procédé selon la revendication 1 ou 2 caractérisé par le fait que les paquets de données, qui doivent être transmis à un groupe de LECs destinataires, sont transmis à un GAA d'un réseau CLS à grande distance offrant un service en mode non connecté, que le GAA résout l'adresse de groupe et que les paquets de données sont transmis aux ELANs des différents LECs destinataires.

4. Procédé selon la revendication 1
**caractérisé par le fait**
que l'établissement de la communication entre le LEC source et le LEC destinataire à travers un réseau ATM à grande distance est sollicité suivant les étapes de procédé suivantes:
- Déterminer l'adresse ATM de destination par transmission, à un deuxième ELAN, via un réseau CLS à grande distance offrant un service en mode non connecté, d'une demande de résolution d'adresse du LEC source et résolution, dans le deuxième ELAN, de l'adresse MAC de destination en l'adresse ATM correspondante;
- Solliciter l'établissement d'une communication entre le LEC source et le LEC destinataire à travers un réseau ATM d'un niveau supérieur au premier ELAN et au deuxième ELAN, en utilisant l'adresse ATM de destination déterminée.

5. Procédé selon la revendication 4
**caractérisé par le fait**
que l'établissement de la communication entre le LEC source et le LEC destinataire à travers un réseau ATM à grande distance est sollicité suivant les étapes de procédé suivantes:
- l'adresse ATM déterminée dans le deuxième ELAN par résolution de l'adresse MAC de destination est transmise au premier ELAN, en tant que réponse à la demande de résolution d'adresse, à travers un réseau CLS à grande distance offrant un service en mode non connecté, et, de là, au LEC source et
- le LEC source provoque, à travers le réseau ATM de niveau supérieur, l'établissement d'une communication vers le LEC destinataire.

6. Procédé selon la revendication 1
**caractérisé par le fait**
que l'établissement de la communication entre le LEC source et le LEC destinataire à travers un réseau ATM à grande distance est sollicité suivant les étapes de procédé suivantes:
- Déterminer l'adresse ATM de destination par transmission, au deuxième ELAN via un réseau à grande distance offrant un service en mode non connecté, d'une demande de résolution d'adresse du LEC source, cette demande comportant une information pour solliciter l'établissement d'une communication,
- Transmettre, au LEC destinataire à l'intérieur du deuxième ELAN, l'information pour solliciter l'établissement d'une communication,
- Solliciter, par le LEC destinataire, l'établissement d'une communication entre le LEC source et le LEC destinataire à travers un réseau ATM d'un niveau supérieur au premier ELAN et au deuxième ELAN.
